# EUROPEAN PATENT APPLICATION

(11) **EP 4 806 276 A1**
(43) Date of publication of application: **16.09.2026**
(21) Application number: 23817175.5
(22) Date of filing: 08.11.2023
(51) Int. Cl.: A23N 1/00, A23N 1/02, A47J 19/02

(54) **SELF-CLEANING FRUIT JUICING MACHINE AND METHOD FOR CLEANING THE FRUIT JUICING MACHINE**

(71) Applicant: Zummo Innovaciones Mecánicas, S.A.U., 46113 Moncada (ES)
(72) Inventor: MARTÍNEZ ROCA, Jorge, 46113 Moncada (Valencia) (ES); MORCILLO MORALES, Luis, 46113 Moncada (Valencia) (ES); PUERTA LEÓN, Javier, 46113 Moncada (Valencia) (ES); PÉREZ MORILLO, Javier, 46113 Moncada (Valencia) (ES); MOLINA GALÁN, Daniel, 46113 Moncada (Valencia) (ES)
(74) Representative: Clarke, Modet y Cía., S.L.
(86) International application number: PCT/ES2023/070660
(87) International publication number: WO 2025/099333

(57) **Abstract**

An object of the invention is a self-cleaning fruit squeezing machine with an upper container (1), a feeding system (2), cutting and squeezing means (3a) and filtering means (3b) and a lower container (9) connected to a dispensing tap (7). Further, the machine presents a cleaning system with a cleaning module (4) in its lower part with a water tank (5), connected to a control system, and a single washing circuit (6) connected to the tank (5) and to nozzles (13) for spraying water and cleaning the inside of the squeezing machine. Another object of the invention is a method of cleaning the previous squeezing machine, in which a cleaning of the different elements is carried out by spraying water through nozzles (13) connected to a cleaning module by means of a single washing circuit (6).

## Description

### Field of the Invention

The present invention belongs to the technical field of the agri-food industry, and specifically to that of fruit squeezing machines, mainly oranges, but also other citrus fruits and pomegranates. More specifically the invention refers to a self-cleaning fruit squeezing machine, by means of a self-contained cleaning module connected to the squeezing machine.

### Background of the Invention

Several automatic fruit squeezing machines are known in the state of the art, mainly for oranges, but also for other citrus fruits. These machines are mainly based on the movement of the fruit so that it is cut and the resulting parts are then squeezed.

In general, most industrial and large capacity squeezers or those used in the hospitality industry and similar, as well as food stores, supermarkets, shopping centers and other retail outlets, extract the juice by means of a simultaneous and coincident rotary movement of some pockets or cups with some squeezing pinecones or balls corresponding thereto.

By way of example, documents ES2091702B1, PCT/ES2012/070394, P201230986 or ES2545235B1 show squeezing machines with means for loading and feeding the fruits, as well as mechanisms for cutting and squeezing them.

However, none of these machines in the previous documents have means for cleaning, which is a problem, because the squeezing process requires maximum hygiene conditions, since the juice obtained is not chemically treated or pasteurized. Cleaning must be applied to the cutting and squeezing elements, as well as to the main container of the machines and the entrance to these machines through the feeding area, including all the elements that may have contact with the fruit or juice extracted from it. Therefore, to maintain proper hygiene in the machines, once they have finished their service at the end of the day, they must be cleaned manually, often disassembling part of their components to access all areas, resulting in a tedious and time-consuming cleaning operation.

It is therefore desirable to have a self-cleaning fruit squeezing machine that performs a complete cleaning of the machine once its operation is finished, thus avoiding the disadvantages existing in the previous machines of the state of the art.

### Description of the Invention

The present invention solves the problems existing in the state of the art by means of a self-cleaning fruit squeezing machine, which has an upper container, a fruit feeding system arranged on the upper container, and fruit cutting and squeezing means arranged under the feeding system, into the upper container. Additionally, under the upper container the machine has a lower container which houses filtering means inside it, and the juice obtained is collected in the lower container. The lower container is connected to a dispensing tap for the juice obtained from the machine during the squeezing process. Both the feeding system and the fruit cutting, squeezing and filtering means are driven by driving means. The machine is equipped with a control unit to control said driving means.

The machine has waste collection means arranged under the lower container configured to collect pulp and rinds obtained by the cutting, squeezing and filtering means.

The machine object of the present invention has a cleaning system connected to the control system, which operates in an automated and programmable manner. The cleaning system is formed by a cleaning module arranged under the lower container, a single washing circuit connected to the cleaning module and distributed throughout the interior of the machine, and a plurality of nozzles connected to the washing circuit.

The cleaning module under the lower container has a water tank connected to the lower container by means of a distributor which is in turn connected to the control system. The tank has means for water inlet and outlet, which in particular may consist of a solenoid valve connected to the mains supply, an impeller pump to propel the water from the tank into the washing circuit and a drain pump to remove the water from the tank, all elements are connected to the control system. The single washing circuit is connected to the water tank of the cleaning module, and is responsible for conducting the water in its path for cleaning the inside of the squeezing machine including the base of the feeding system and the cutting, squeezing and filtering means, as well as the inside of the upper container and the lower container. For this purpose, the cleaning system has nozzles connected to the washing circuit and strategically arranged on the cutting, squeezing and filtering means, and on the base of the feeding system, which spray water on the above elements for cleaning, so that the water used for cleaning falls through the interior of the upper container to the lower container, which collects it and feeds it back to the water tank of the cleaning module.

Preferably, the tank may feature multiple sensors for water level detection that are connected to the control system and detect the existing water level in the tank, such that the control system will make a comparison with the desired preset water level for proper operation of the machine.

Additionally, according to a preferred embodiment of the invention, the tank has in its interior a heating element for heating the water to be able to perform a more thorough cleaning of the machine with hot water. Thus, the user can choose between performing a cleaning with cold water, for example during the day, between squeezing cycles of the machine, and, for example, at night, performing a more thorough cleaning with hot water, once the squeezing cycles have finished.

According to different particular embodiments of the invention, both upper and lower containers are watertight to avoid any fluid leakage to the outside of the same, either splashes of juice or water from cleaning. To allow access to its interior, the containers have a front door coupled by hinges that allows easy opening and closing and provides the required tightness by sealing means.

In order to facilitate the cleaning of the interior of the upper container, preferably the cutting and squeezing means can be removable from the interior of said upper container. Likewise, the waste collection means and the fruit feeding system can also be removable.

According to different preferred embodiments of the invention, the containers will have inside them motorized gates for the passage and extraction of rinds and pulp obtained in the cutting and squeezing and filtering means.

According to a particular embodiment of the invention, the washing circuit may additionally be connected directly to the mains supply, which may provide water to the nozzles for washing or rinsing the various components without depending directly on the tank, or on whether the tank is full or not.

According to a preferred embodiment of the invention, the fruit squeezing machine features forced ventilation means arranged on the sides, on at least its upper part, on both sides of the fruit feeding system. These forced ventilation means present a double advantage. On the one hand, they prevent the entry of mosquitoes and other insects into the processing area of the machine, and on the other hand, they act as an extractor hood carrying away the steam generated during cleaning with hot water, preventing this steam from reaching the fruit that may have remained in the feeding system.

Preferably, the fruit squeezing machine has an anti-drip tray which is arranged under the dispensing tap, and which presents two operating positions: a first lower position for the collection of dripping from the tap after the juice supply, in which said anti-drip tray is connected to the waste collection means, to lead to the latter all the dripping of juice from the tap, and a second upper position for the collection of cleaning water through the tap, connected to the tank, to recirculate to said tank the water that has been used in the cleaning stage and that has circulated through the tap for the cleaning of the same.

Another object of the present invention is a method of cleaning a fruit squeezing machine as described above. The cleaning method has the following stages:
First of all, the water tank is filled, e.g. by means of the inlet solenoid valve connected to the mains supply.

Subsequently, via the impeller pump, the water is driven from the tank to the single washing circuit, which conducts the water to the strategically distributed nozzles, cleaning the inside of the machine, including the containers, the door, the feeding system and the cutting, squeezing and filtering means, thanks to the spraying of all the elements by the nozzles. During all this stage of cleaning of the cutting, squeezing and filtering means, the water used falls through these means inside the upper container to the lower container, and through the distributor, returns to the tank, where it is recycled and continues to be used. Finally, at the end of the washing process, the water tank of the cleaning module is emptied.

According to a preferred embodiment of the method, before filling the tank, a solid waste removal stage is carried out by operating the cutting, squeezing and filtering means under vacuum, i.e. without fruit inside the containers. In this way, the movement of these means performs a mechanical cleaning of solid residues, which will fall inside the containers and can be extracted.

As for the tap that connects the lower container to the juice outlet, this tap will be opened, logically, during the squeezing operation of the machine in order to release the juice generated. This tap, during the cleaning stages, depending on the type or mode of cleaning to be performed, can be closed or open for cleaning.

According to particular embodiments, and specifically in cleaning operations that are carried out more thoroughly, for example, at night, when the machine is not being used to squeeze fruit (although such thorough cleaning could also be carried out during the day), together with the cleaning stage of the cutting, squeezing and filtering means, the base of the feeding system is cleaned by means of a single washing circuit that directs the water to the nozzles arranged on the base of the feeding system. This joint cleaning is carried out by distributing the volume of water that is propelled by the washing circuit conveniently between the area of the base of the feeding system and the area of the containers by means of multi-valves or corresponding solenoid valves.

The water tank is then emptied to remove the water from the tank and direct it to a drain or any other additional tank.

According to a particular embodiment of the invention, after the stage of emptying the water tank, it is possible to perform a rinsing of the cutting, squeezing and filtering means with water taken directly from the mains supply, and subsequent draining of the water used.

### Brief Description of the Drawings

In the following, in order to facilitate the understanding of the invention, by way of illustration, but not limitation, an embodiment of the invention will be described with reference to a set of figures.

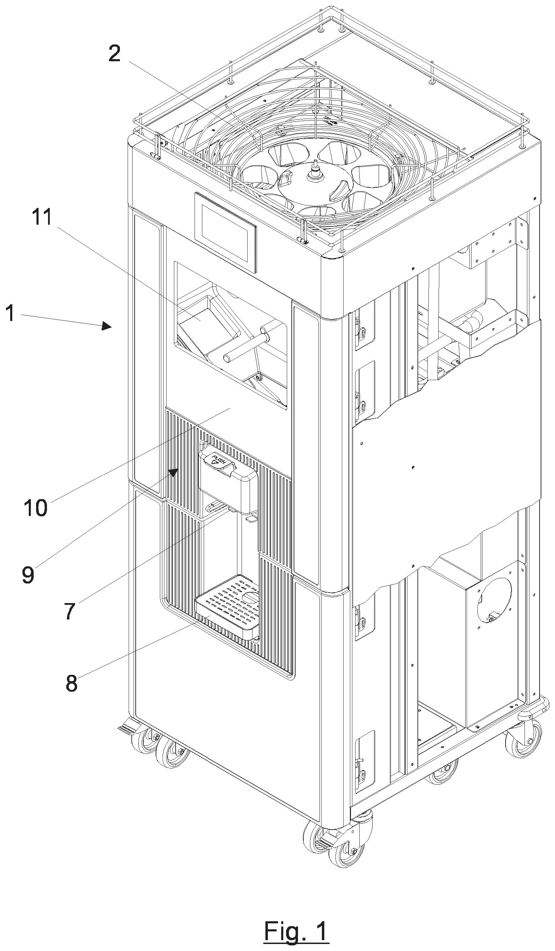

Figure 1 is a front face perspective view of an embodiment of a machine object of the present invention showing some of its elements, such as the washing circuit, and for the sake of clarity the cutting, squeezing and filtering means and their driving means have been removed.

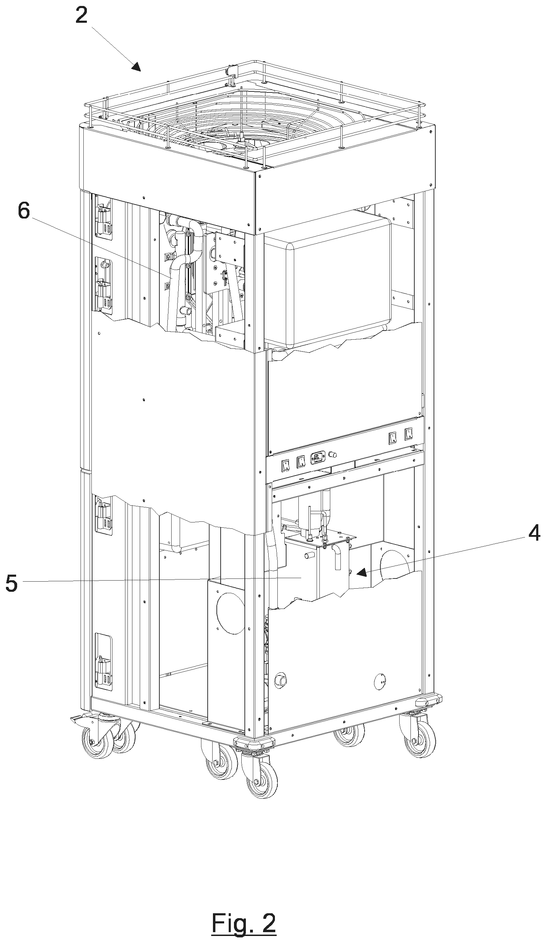

Figure 2 is a front rear perspective view of the machine of Figure 1 showing the cleaning module and the washing circuit.

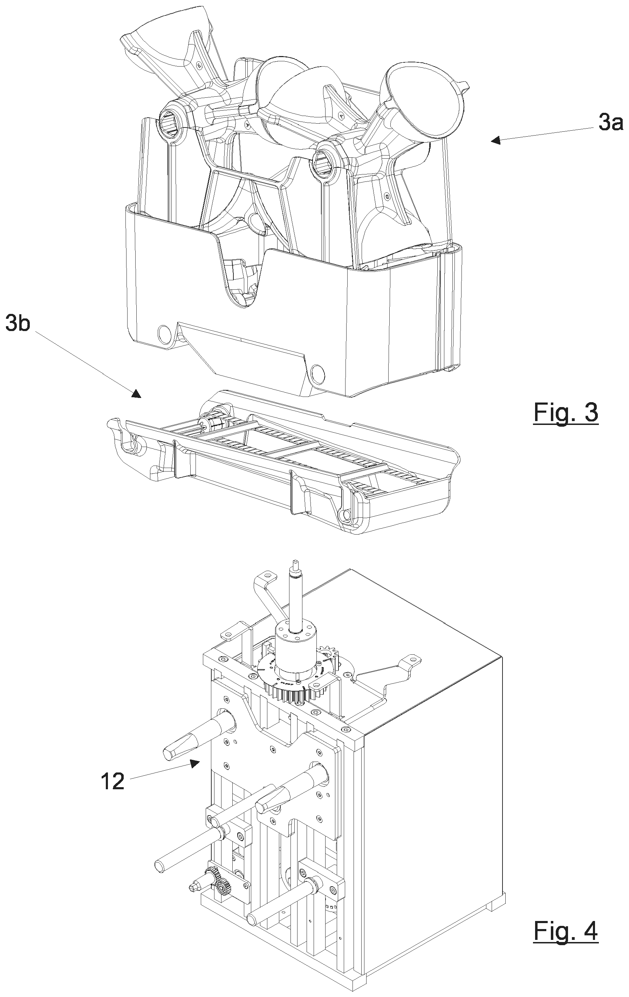

Figure 3 is a perspective view of an embodiment of the cutting, squeezing and filtering means of a squeezing machine object of the invention.
Figure 4 is a perspective view of an embodiment of the driving means of the cutting, squeezing and filtering means of a squeezing machine object of the invention.

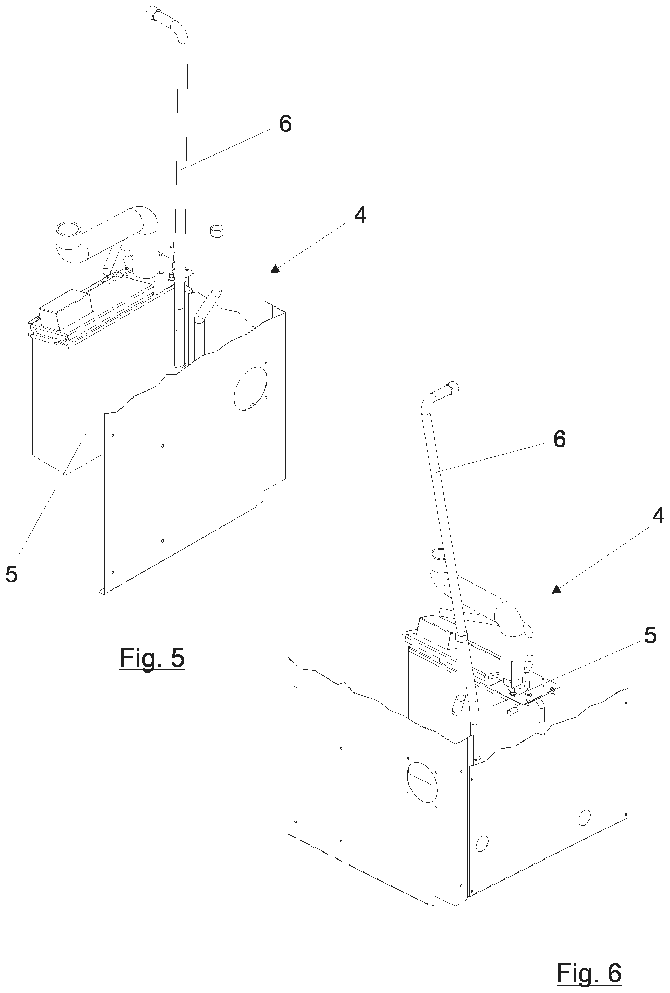

Figure 5 is a front face perspective view of an embodiment of a cleaning module of a squeezing machine object of the invention including a tank connected to a portion of a washing circuit.
Figure 6 is a front rear perspective view of the cleaning module of Figure 5.

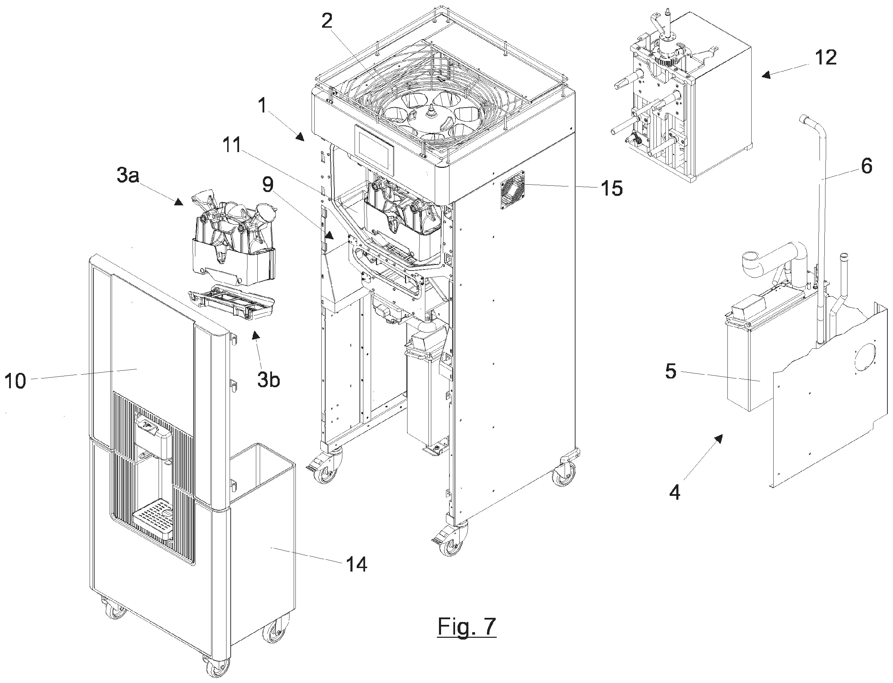

Figure 7 is an exploded perspective view of an embodiment of a machine object of the present invention showing its essential elements.
Figure 8 shows a partial perspective view of an embodiment of the upper container showing the fasteners for the front door junction.
Figure 9 shows a partial perspective view of a front door embodiment attachable to the containers of Figure 8.
Figures 10a and 10b are a partial view showing the anti-drip tray in two positions. Figure 10a shows a first lower position for drip collection from the tap after juice delivery. Figure 10b shows a second upper position for the collection of cleaning water through the tap where the tray is connected to the tank.
Figure 11 shows a partial front view of the machine showing motorized gates inside the containers, as well as the nozzles.

In these figures, reference is made to a set of elements that are:
- 1.: upper container
- 2.: fruit feeding system
- 3a.: fruit cutting and squeezing means
- 3b.: filtering means
- 4.: self-contained cleaning module
- 5.: cleaning module water tank
- 6.: washing circuit
- 7.: tap
- 8.: anti-drip tray
- 9.: lower container
- 10.: front door
- 11.: motorized gates for rind and pulp extraction
- 12.: driving means for cutting, squeezing and filtering means
- 13.: nozzles
- 14.: waste cart
- 15.: forced ventilation means

### Detailed Description of the Invention

An object of the present invention is a self-cleaning fruit squeezing machine.

As can be seen in the different figures, the machine has mainly an upper container (1), a fruit feeding system (2) arranged over the upper container (1), and fruit cutting and squeezing means (3a) arranged under the feeding system (2), inside the upper container (1). Additionally, under the upper container (1), the machine has a lower container (9) comprising inside it filtering means (3b), the juice obtained being collected in said lower container (9). The lower container (9) is connected to a dispensing tap (7) for the output of the juice obtained from the machine in the squeezing process.

The feeding system (2), the fruit cutting and squeezing means (3a) and the filtering means (3b) are driven by driving means (12), which conventionally consist of electric motors, connecting elements and actuators that move the different components. The machine also has a control unit for controlling the driving means (12) of the feeding system (2) and the cutting and squeezing means (3a) and filtering means (3b).

A single motor coupled to all the elements could be used, although according to a preferred embodiment of the invention the driving means (12) will have self-contained electric motors driving exclusively the power supply system (2), and each of the different components of the cutting and squeezing means (3a) and filtering means (3b), such as for rotation of the cups, lowering of the cups for squeezing, or movement of the filtering means (3b) under the squeezing means. According to this preferred embodiment, the driving means (12) have intensity measuring means on each of the self-contained motors, and the control unit is configured to independently control each of the different self-contained electric motors, stop the same or reverse their movement when the measured intensity is outside a preset range of values, and vary the intensity, speed, running time and power of each of the motors.

The machine is also provided with waste collection means arranged under the lower container (9), for the collection of pulp and rinds obtained by the cutting and squeezing means (3a) and filtering means (3b). These means of collection will preferably consist of a waste cart (14). This waste cart (14) will preferably be removable, and may have one or more waste bins.

According to the object of the invention, the machine has a cleaning system independent of the previous elements, connected to the automated and programmable control system. This cleaning system is formed by a cleaning module (4) arranged under the lower container (9), a single washing circuit (6) connected to the cleaning module (4) and distributed throughout the interior of the machine, and a plurality of nozzles (13) connected to the washing circuit (6).

The cleaning module (4) under the lower container (9) has a water tank (5) connected to the lower container (9) by means of a distributor, which in turn is connected to the control system. The single washing circuit (6) is connected to the water tank (5) of the cleaning module (4), and conducts the water in its path for cleaning the inside of the squeezing machine, including all the elements of the same, such as the base of the feeding system (2), the cutting and squeezing means (3a), filtering means (3b), as well as the front door (10) and the inside of the upper container (1) and the lower container (9). This washing circuit (6) is mainly formed by ducts that go up from the cleaning module (4) to the cutting and squeezing means (3a) and filtering means (3b) and the feeding system (2) to provide them with water, and multi-valves that connect the different ducts together allowing or preventing the flow of water in or out through the different ducts, and thus providing the circulation and distribution of the water flow through different paths in the washing circuit (6). In this way, the washing circuit (6) may provide water for washing to all the elements of the machine, or only to some of them, depending on the particular requirements. Therefore, different configurations and arrangements of ducts and valves will be possible to adapt to particular needs of different washing circuits (6) in each machine. As for the nozzles (13) of the cleaning system, these are strategically arranged on the cutting and squeezing means (3a) and filtering means (3b) and on the base of the feeding system (2), and are connected to the ducts of the washing circuit (6), and they are in charge of spraying with the water coming from the washing circuit (6) said cutting and squeezing means (3a) and filtering means (3b) and feeding system (2) for cleaning them, as well as the inside of the containers (1,9) and the front door (10). Subsequently, the water used for cleaning falls through the interior of the upper container (1) to the lower container (9), which collects it and feeds it back to the water tank (5) of the cleaning module (4).

According to different particular embodiments of the invention, the tank (5) has means for the inlet and outlet of water, which in particular may consist of a solenoid valve connected to the mains supply, an impeller pump to propel the water from the tank into the washing circuit and a drain pump to remove the water from the tank, all elements connected to the control system.

Further, preferably the tank (5) has multiple sensors for detecting the water level which are connected to the control system and detect the existing water level in the tank (5), so that the control system will make a comparison with the desired preset water level for the operation of the machine.

Additionally, according to a preferred embodiment of the invention, the tank (5) can be provided with a heating element for heating the water inside the container for more thorough cleaning of the machine with hot water. Thus, the user can choose between performing a cleaning with cold water, for example during the day, between squeezing cycles of the machine, and, for example, at night, performing a thorough cleaning with hot water once the squeezing cycles have finished, in which case the heating element of the container will be activated.

According to different particular embodiments of the invention, both upper (1) and lower (9) containers are watertight to prevent any fluid leakage to the outside of the container, whether juice splashes or water from cleaning process. To allow (or prevent) access to the interior, the containers (1,9) have a front door (10) coupled by hinges which allows easy opening and closing as well as providing the required tightness by sealing means.

In order to facilitate the cleaning of the interior of the upper container (1), preferably the cutting and squeezing means (3a) can be removable from the interior of the upper container (1). Likewise, the waste cart (14) and the fruit feeding system (2) can also be removable.

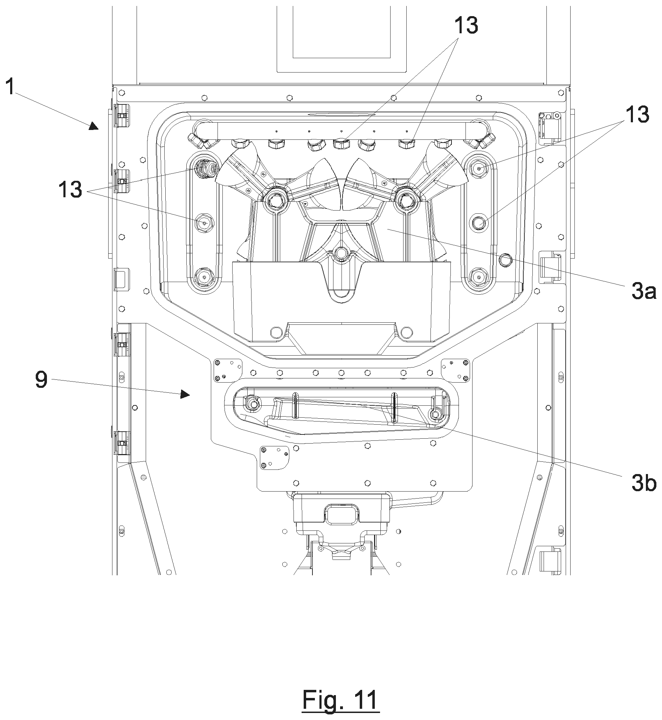

According to different preferred embodiments of the invention, the containers (1,9) will have inside them motorized gates (11) for the passage and extraction of rinds and pulp obtained in the cutting and squeezing means (3a) and filtering means (3b), as shown in Figure 11. These motorized gates (11) will be open during the processing of the juice for the evacuation of residues, while they will be closed during the washing and cleaning phases, to prevent water from escaping through them.

According to a particular embodiment of the invention, the washing circuit (6) may be additionally connected to the water mains supply by means of the inlet solenoid valve which also directs water to the tank (5). In this way the water mains supply may provide water to the nozzles (13) to be able to perform the washing or rinsing of the different components without depending on the tank (5) of the cleaning module (4), or on whether it is full or not.

According to a preferred embodiment of the invention, the fruit squeezing machine has forced ventilation means (15) arranged on the sides, in at least its upper part, on both sides of the fruit feeding system (2). These forced ventilation means (15) have the double advantage of preventing the entry of mosquitoes and other insects into the processing area, and also have the function of an extractor hood carrying away the steam generated during the cleaning of the machine with hot water, preventing this steam from reaching the fruit that may have remained in the feeding system (2).

Preferably, the fruit squeezing machine has an anti-drip tray (8) which is arranged under the dispensing tap (7), and which presents two operating positions: a first lower position for the collection of the dripping from the tap (7) after the juice dispensing, in which said anti-drip tray (8) is connected to the waste collection means, to lead to the these all the dripping of juice from the tap (7), and a second upper position for the collection of cleaning water that has circulated through the tap (7), connected to the tank (5), to recirculate to said tank (5) the water that has been used in the cleaning stage and that has circulated through the tap (7) for the cleaning of the same.

Another object of the present invention is a method of cleaning a fruit squeezing machine as described above. The cleaning method has the following stages:
First, the tank (5) is filled with water, for example by means of the inlet solenoid valve (16) connected to the mains supply.

Subsequently, the water from the tank (5) is pumped to the washing circuit (6), the water from the tank (5) is pumped through the washing circuit to the nozzles (13), and the inside of the machine, including the containers (1,9), the front door (10), the feeding system (2) and the cutting and squeezing means (3a) and filtering means (3b), is cleaned by spraying all the elements with water from the strategically distributed nozzles (13).

Throughout this cleaning stage the cutting and squeezing means (3a) and filtering means (3b) are moving to ensure that the water reaches all points of the same, the water used falls through these means inside the upper container (1) to the lower container (9), and through the distributor, returns to the container (5), thus being the water recycled and can continue to be used. Finally, at the end of the washing process, the water tank (5) is emptied from the cleaning module (4).

According to a preferred embodiment of the invention, before the filling of the container, a removing stage of solid waste is carried out by operating the cutting and squeezing means (3a) and filtering means (3b) of the machine under vacuum, i.e. without fruits inside the containers (1,9). In this way, the movement of these means (3a,3b) performs a mechanical cleaning of solid residues, which will fall inside the upper container (1) and can be extracted through the different gates (11), depending on whether they are rinds or pulp, or depending on the point where they are.

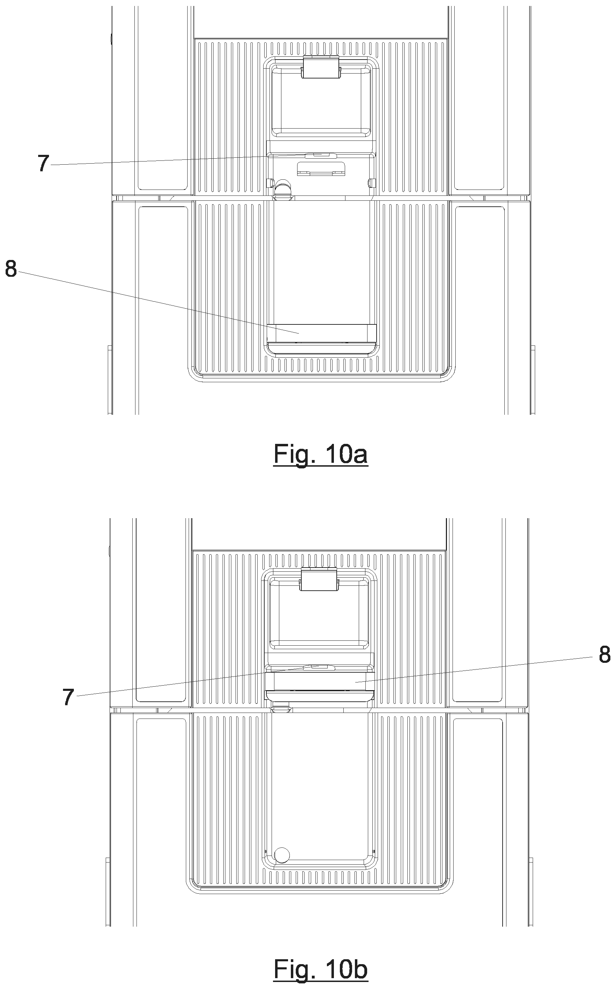

As for the tap (7) connecting the lower container (9) for the juice outlet, said tap (7) will be opened during the squeezing operation of the machine to give outlet to the juice generated. During this squeezing operation of the machine, in the preferred embodiment thereof including an anti-drip tray (8), said anti-drip tray (8) will be arranged in a first lower position as shown in Figure 10a, for the collection of the dripping from the tap (7) after the various juice deliveries. In this position the anti-drip tray (8) is connected to the waste collection means to direct this juice drip towards them. This lower position facilitates the positioning and filling of the juice bottles.

During the cleaning steps, depending on the type or mode of cleaning to be performed, the tap (7) may be closed or to perform in this way a cleaning also of said tap (7).

According to different particular embodiments of the invention, in a more thorough cleaning method, together with the stage of cleaning the cutting and squeezing means (3a) and filtering mans (3b) a cleaning of the base of the feeding system (2) is carried out by spraying water through the nozzles (13). For this purpose, the volume of water that is pumped through the washing circuit (6) is distributed between the area of the base of the feeding system (2) and the area of the upper container (1).

The water tank (5) is then emptied by the emptying means, e.g. an emptying pump, to remove the water from the tank (5) and direct it to the drain or other element that can collect the water.

According to a particular embodiment of the invention, after the stage of emptying the water tank (5), an additional washing out or rinsing of the cutting and squeezing means (3a) and filtering means (3b) can be carried out if necessary with water taken directly from the mains supply through an inlet solenoid valve, and subsequent draining of the water used.

Thus, by means of the fruit squeezing machine object of the invention, and according to the described cleaning method, different cleanings of the machine can be carried out, of greater or lesser degree of depth, and various short cleaning cycles are carried out interspersed between some of the squeezing cycles (usually day mode), or a longer cleaning cycle can be carried out (usually night mode).

These two modes of operation could be called day mode and night mode, although they can be performed and combined as desired at any time of the day, logically taking into account that while a cleaning cycle is being performed the machine will not be operative to perform a squeezing cycle.

In day mode, with short cleaning cycles interspersed between some of the squeezing cycles, solid residues are first removed by actuating the cutting and squeezing means (3b) and filtering means (3b). The tank (5) is then filled with water from the means supply. The cold water in the tank (5) is used to clean the cutting and squeezing means (3a) and filtering means (3b), the water is pumped into the washing circuit (6) by means of the impeller pump and sprayed through the nozzles (13).

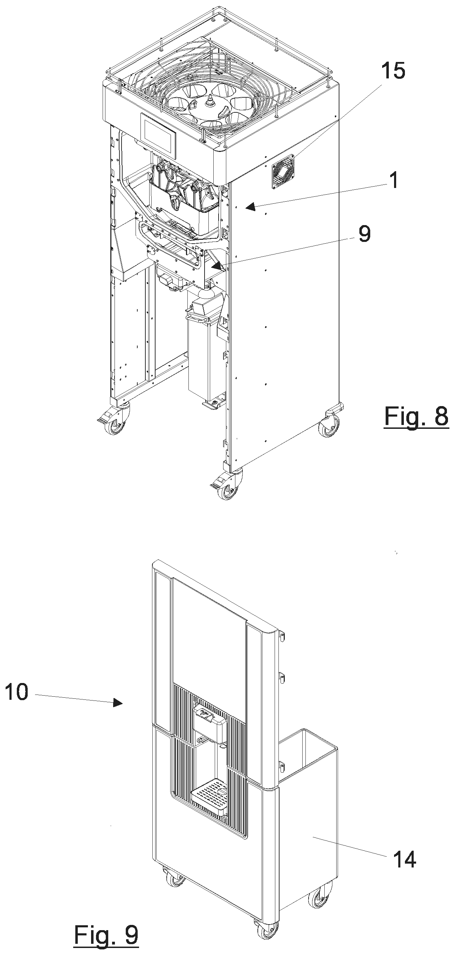

In this case it can be seen that in Figure 8c the arrangement of the valves (18) allows all the water flow to the cutting and squeezing means (3a) and filtering means (3b) through the central part of the machine, while in Figure 8d the arrangement of the valves (18) allows all the water flow to the lateral parts of the machine, but alternatively the valves (18) could be configured so that part of the water flow reaches the central part and a portion of the flow reaches the lateral parts of the machine, if this were necessary, as indicated above.

During this cleaning stage, the tap (7) remains closed to prevent the water that falls into the lower container (9) from flowing out of the tap (7) and the distributor remains open so that the water that falls back into the tank (5) can continue to be used. Subsequently, at the end of the cleaning stage, the tank (5) is emptied.

As for the night mode, i.e. longer and deeper cleaning cycles when the machine does not perform fruit squeezing, first of all a removal of solid residues is also carried out by operating the cutting and squeezing means (3a) and filtering means (3b). The tank (5) is then filled with water from the means supply. Afterwards, and given that in this case a more thorough cleaning is to be carried out, the water in the tank is heated by means of the heating element inside the tank (5), and then a joint cleaning of both the base of the fruit feeding system (2) and the cutting, squeezing and filtering means (3) is carried out by spraying the hot water through the nozzles (13). In this case, part of the water flow is allowed to pass to the base of the fruit feeding system (2) and part of the water flow to the cutting, squeezing and filtering means (3), in order to clean also the base of the feeding system (2) if necessary.

In this case both the tap (7) and the distributor are open to allow the passage of water and the washing of the tap (7). Subsequently, once the cleaning is finished, the water tank (5) is emptied. In this case of night mode, to provide greater cleaning, after emptying the tank (5) could be performed an additional washing out or rinsing of the cutting and squeezing means (3a) and filtering means (3b) through the nozzles (13) rising to the washing circuit (6) water taken directly from the mains supply, and a subsequent emptying of the water that has fallen from the tank (5) after performing the rinsing.

During this night mode operation, the anti-drip tray (8) is placed in a second upper position, as shown in Figure 10b. In this position it performs the collection of water that has been used in cleaning in night mode, and returns it to the tank (5).

## Claims

1. Self-cleaning fruit squeezing machine, comprising.
- an upper container (1),
- a fruit feeding system (2) arranged on the upper container (1),
- fruit cutting and squeezing means (3a) arranged under the feeding system (2), inside the upper container (1),
- a lower container (9) arranged under the upper container (1), which houses inside it filtering means (3b), configured to receive and filter the juice obtained and connected to a dispensing tap (7) configured for the output of the juice from the machine,
- driving means (12) configured to drive the feeding system (2) and the cutting and squeezing means (3a) and filtering means (3b),
- a control system configured to control the driving means (12) of the feeding system (2) and the cutting and squeezing means (3a) and filtering means (3b),
- waste collection means arranged under the lower container (9), configured to collect pulp and rinds obtained by the cutting and squeezing means (3a) and filtering means (3b),
**characterized in that** it comprises a cleaning system connected to the control system, automated and programmable, comprising
- a cleaning module (4) arranged under the lower container (9) comprising in turn a water tank (5) connected to the lower container (9) by a distributor connected in turn to the control system,
- a single washing circuit (6) connected to the water tank (5) of the cleaning module (4) configured to conduct the water in its path for cleaning the inside of the squeezing machine, and
- nozzles (13) connected to the washing circuit (6) and arranged on the cutting and squeezing means (3a) and filtering means (3b) and on the base of the feeding system (2), configured to expel water.

2. Self-cleaning fruit squeezing machine according to anyone of the preceding claims, wherein the tank (5) comprises water level detecting sensors.

3. Self-cleaning fruit squeezing machine according to anyone of the preceding claims, wherein the tank (5) comprises in its interior a heating element (15) configured to heat the water.

4. Self-cleaning fruit squeezing machine according to anyone of the preceding claims, comprising a front door (10) configured for the watertight closing of the containers (1,9).

5. Self-cleaning fruit squeezing machine according to anyone of the preceding claims, wherein the cutting and squeezing means (3a) are removable.

6. Self-cleaning fruit squeezing machine according to anyone of the preceding claims, wherein the fruit feeding system (2) is removable.

7. Self-cleaning fruit squeezing machine according to any one of the preceding claims, wherein the waste collection means are removable.

8. Self-cleaning fruit squeezing machine according to anyone of the preceding claims, in which the containers (1,9) comprise in their interior motorized gates (11) configured for the passage and extraction of rinds and pulp obtained in the cutting and squeezing means (3a) and filtering means (3b).

9. Self-cleaning fruit squeezing machine according to anyone of the preceding claims, in which
- the driving means (12) of the feeding system (2) and of the cutting and squeezing means (3a) and filtering means (3b) comprise self-contained electric motors exclusively driving the feeding system (2) and the different components of the cutting and squeezing means (3a) and filtering means (3b),
- the driving means (12) comprise intensity measuring means on each of the self-contained motors,
- the control unit is configured to independently control each of the different self-contained electric motors, stop or reverse their movement when the measured current is outside a preset range of values, and vary the intensity, speed, running time, and power of each of the electric motors.

10. Self-cleaning fruit squeezing machine according to anyone of the preceding claims, comprising forced ventilation means (15) arranged on the sides, in at least its upper part, on both sides of the fruit feeding system (2).

11. Self-cleaning fruit squeezing machine according to anyone of the preceding claims, comprising an anti-drip tray (8) arranged under the tap (7), comprising
- a first lower position configured to collect the dripping from the tap (7) after the juice supply, connected to the waste collection means, and
- a second upper position configured for the collection of cleaning water through the tap (7), connected to the tank (5).

12. Method of cleaning the fruit squeezing machine of anyone of claims 1 to 11, **characterized in that** it comprises the following stages:
- filling the water tank (5),
- cleaning of the inside of the squeezing machine including the containers (1,9), the front door (10), and the cutting and squeezing means (3a) and filtering means (3b) by the single washing circuit (6) connected to the tank (5) which conducts the water to the nozzles (13),
- emptying of the water tank (5).

13. Cleaning method according to claim 12, wherein prior to filling the tank (5) a removal of solid residues is carried out by operating the cutting and squeezing mans (3a) and filtering means (3b) under vacuum.

14. Cleaning method according to anyone of claims 12 to 13, wherein, together with the cleaning stage of the cutting and squeezing means (3a) and filtering means (3b) a cleaning of the base of the feeding system (2) is carried out by means of the single washing circuit (6) that directs the water to the nozzles (13).

15. Cleaning method, according to anyone of claims 12 to 14, in which after the stage of emptying the water tank (5) a rinsing of the cutting and squeezing means (3a) and filtering means (3b) is performed with water taken directly from the mains supply, and subsequent draining of the water used.
